# EUROPEAN PATENT APPLICATION

(11) **EP 4 489 437 A1**
(43) Date of publication of application: **08.01.2025**
(21) Application number: 24708343.9
(22) Date of filing: 16.02.2024
(51) Int. Cl.: H04R 3/00, H04R 29/00, G06F 1/20, G06F 1/16, G05B 11/42, G05D 23/19, H04R 9/02

(54) **ELECTRONIC DEVICE AND CONTROL METHOD FOR CONTROLLING TEMPERATURE OF SPEAKER, AND STORAGE MEDIUM**

(30) Priority: 19.05.2023 KR 20230064868; 05.06.2023 KR 20230072109
(71) Applicant: Samsung Electronics Co., Ltd., Suwon-si, Gyeonggi-do 16677 (KR)
(72) Inventor: YOON, Gunhyuk, Suwon-si, Gyeonggido 16677 (KR); ROH, Hyunjong, Suwon-si, Gyeonggido 16677 (KR); HONG, Janghoon, Suwon-si, Gyeonggido 16677 (KR); PARK, Youngbae, Suwon-si, Gyeonggido 16677 (KR); YANG, Seongkwan, Suwon-si, Gyeonggido 16677 (KR)
(74) Representative: Appleyard Lees IP LLP
(86) International application number: PCT/KR2024/095284
(87) International publication number: WO 2024/242514

(57) **Abstract**

Disclosed are an electronic device for controlling a temperature of a speaker and a method of controlling the electronic device. The electronic device includes a sensor configured to detect an outside air temperature, a speaker configured to output a sound, and at least one processor. The at least one processor predicts energy of the sound. The at least one processor predicts an amount of an increase or decrease in temperature of the speaker from the predicted energy of the sound. The at least one processor predicts a predicted temperature of the speaker on the basis of the outside air temperature and the amount of the increase or decrease in temperature of the speaker. The at least one processor maintains a temperature of the speaker to a threshold temperature or lower on the basis of the predicted temperature and the threshold temperature of the speaker.

## Description

### [Technical Field]

Embodiments of the present document relate to an electronic device for controlling a temperature of a speaker, and a control method.

### [Background Art]

An electronic device may output sound signals, such as sound sources, through a speaker. The speaker may include a permanent magnet and a coil, and a diaphragm may be attached to the coil. The coil adj acent to the permanent magnet may reciprocate depending on changes in polarities and voltages of electrical sound signals. The diaphragm may generate acoustic wave signals by vibrating air in response to the reciprocating motion of the coil. With the above-mentioned process, the speaker may convert the electrical sound signals into acoustic waves and output the acoustic waves. When the speaker performs the operation of converting the electrical signals into the acoustic waves and outputting the acoustic waves, a temperature of the speaker may be raised.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

Various embodiments of the present document may protect a speaker by controlling a temperature of the speaker.

### [Solution to Problem]

According to an aspect of the present disclosure, there is provided an electronic device comprising: a sensor configured to detect an outside air temperature; a speaker configured to output a sound; and at least one processor, wherein the at least one processor is configured to: predict energy of the sound; predict an amount of an increase or decrease in temperature of the speaker from the predicted energy of the sound; predict a predicted temperature of the speaker on the basis of the outside air temperature and the amount of the increase or decrease in temperature of the speaker; and maintain a temperature of the speaker to a threshold temperature or lower on the basis of the predicted temperature and the threshold temperature of the speaker. The amount of an increase or decrease in temperature of the speaker from the predicted energy of the sound may be predicted using a thermal model.

In an embodiment, the at least one processor is configured to maintain the temperature of the speaker to the threshold temperature or lower by controlling an output of the sound when it is identified that the predicted temperature exceeds the threshold temperature.

In an embodiment, the at least one processor is configured to control the output of the sound on the basis of at least one of a difference between the predicted temperature and the threshold temperature, the outside air temperature, and a gradient of the amount of the increase or decrease in temperature.

In an embodiment, the at least one processor is configured to control the output of the sound by adjusting a gain of the output of the sound by using proportional integral differential, PID, control.

In an embodiment, the thermal model comprises an equivalent resistor and an equivalent capacitor of the speaker.

In an embodiment, the at least one processor is configured to predict the amount of the increase or decrease in temperature on the basis of an equivalent resistor value, an equivalent capacitor value, and the predicted energy of the sound.

In an embodiment, the at least one processor is configured to divide the sound into sound parts by preset unit time and predicts energy of the sound parts before the sound parts separated by the preset unit time are outputted.

According to an aspect of the present disclosure, there is provided a method of controlling an electronic device, the method comprising: acquiring energy of a sound; acquiring an amount of an increase or decrease in temperature of a speaker from the predicted energy of the sound by using a thermal model; acquiring a predicted temperature of the speaker on the basis of a detected outside air temperature and the amount of the increase or decrease in temperature of the speaker; and maintaining a temperature of the speaker to a threshold temperature or lower on the basis of the predicted temperature and the threshold temperature of the speaker.

In an embodiment, in the maintaining of the temperature of the speaker to the threshold temperature or lower, the method comprises controlling an output of the sound to maintain the temperature of the speaker to the threshold temperature or lower when it is identified that the predicted temperature exceeds the threshold temperature.

In an embodiment, in the maintaining of the temperature of the speaker to the threshold temperature or lower, the method comprises controlling the output of the sound on the basis of at least one of a difference between the predicted temperature and the threshold temperature, the outside air temperature, and a gradient of the amount of the increase or decrease in temperature.

In an embodiment, in the maintaining of the temperature of the speaker to the threshold temperature or lower, the method comprises controlling the output of the sound by adjusting a gain of the output of the sound by using proportional integral differential, PID, control.

In an embodiment, the thermal model comprises an equivalent resistor and an equivalent capacitor of the speaker.

In an embodiment, in the acquiring of the amount of the increase or decrease in temperature of the speaker, the amount of the increase or decrease in temperature is predicted on the basis of an equivalent resistor value, an equivalent capacitor value, and the predicted energy of the sound.

In an embodiment, the acquiring of the energy of the sound comprises: dividing the sound into sound parts by preset unit time; and acquiring the energy of the sound parts before the sound parts separated by the preset unit time are outputted.

According to an aspect of the present disclosure, there is provided a transitory, or non-transitory, computer-readable storage medium having instructions stored thereon that, when executed by a processor, cause the processor to perform the method of any preceding aspect of embodiment of the method.

### [Brief Description of Drawings]

The subject-matter of the present disclosure is best understood with reference to the following figures, in which:
FIG. 1 is a block diagram of an electronic device in a network environment according to various embodiments;
FIG. 2 is a block diagram for explaining the constitution of the electronic device according to various embodiments;
FIG. 3 is a flowchart for explaining a process of outputting a sound according to various embodiments;
FIGS. 4A and 4B are views for explaining a thermal model according to various embodiments; and
FIG. 5 is a flowchart for explaining a method of controlling the electronic device according to various embodiments.

### [Mode for the Invention]

Hereinafter, embodiments of the present disclosure will be described in detail with reference to the drawings so that those with ordinary skill in the art to which the present disclosure pertains may easily carry out the embodiments. However, the present disclosure may be implemented in various different ways and is not limited to the embodiments described herein. In connection with the description of the drawings, the identical or similar reference numerals may be used for the identical or similar components. In addition, in the drawings and related description, descriptions of well-known functions and constitution may be omitted for clarity and brevity.

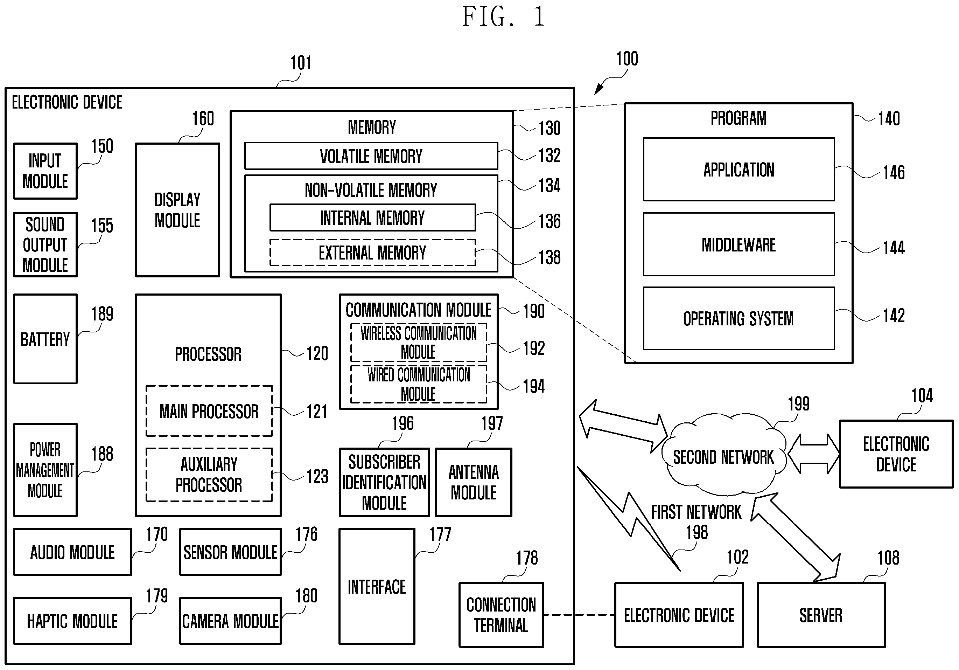

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

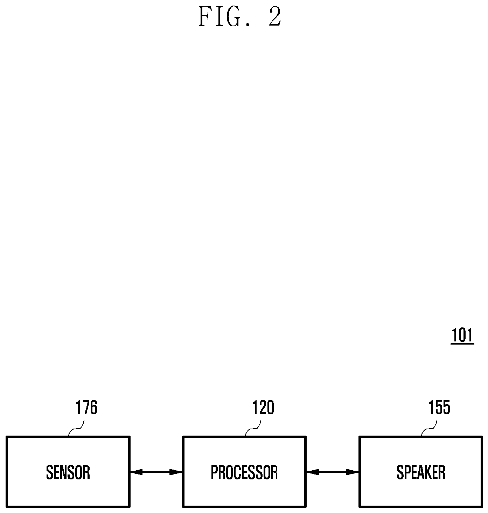

FIG. 2 is a block diagram for explaining the constitution of the electronic device according to various embodiments.

With reference to FIG. 2, the electronic device 101 may include the sensor 176, the processor 120, and the speaker 155. The sensor 176 may detect an outside air temperature. For example, the sensor 176 may include a temperature sensor and be referred to as a sensor part, a sensor module, or a sensor device. The speaker 155 may output a sound (e.g., audio, a voice, a beep, etc.). The speaker 155 may be an example of a sound output module.

The processor 120 may control components of the electronic device 101. The processor 120 may be a single processor 120 or a plurality of processors 120. The processor 120 may predict (or acquire) energy of the sound on the basis of a waveform of the sound regardless of the sound output from the speaker. The energy of the sound may be an intensity of the sound. For example, when the waveform of the sound is a sine wave, a waveform of the intensity of the sound may be the square of the sine wave. Further, the intensity of the sound may be an average value of the square of the sine wave. Therefore, the energy of the sound may be an average value of the waveform made by squaring the waveform of the sound. The phrase "energy of sound" may mean energy associated with a sound signal, or an acoustic wave, that is input to the speaker.

The processor 120 may predict the amount of the increase or decrease in temperature of the speaker 155 from the energy of the sound predicted by using a thermal model. The thermal model may be a model for acquiring, or predicting, heat information from electrical characteristics of the speaker 155. For example, the thermal model may include an equivalent resistor and an equivalent capacitor of the speaker 155. The processor 120 may predict (or acquire) the amount of the increase or decrease in temperature of the speaker 155 on the basis of an equivalent resistor value and an equivalent capacitor value of the thermal model and the predicted energy of the sound.

The processor 120 may predict (or acquire) a predicted temperature of the speaker 155 on the basis of the amount of the increase or decrease in temperature of the speaker 155 predicted by using the thermal model and the outside air temperature detected by the sensor 176. In one embodiment, the processor 120 may determine that the predicted temperature of the speaker 155 is 25.3 degrees when the outside air temperature detected by the sensor 176 is 25 degrees and the predicted amount of the increase or decrease in temperature is 0.3 degrees.

The processor 120 may maintain the temperature of the speaker 155 to a threshold temperature or lower on the basis of the predicted temperature and the threshold temperature of the speaker 155. For example, when the processor 120 identifies that the predicted temperature exceeds the threshold temperature, the processor 120 may maintain the temperature of the speaker 155 to the threshold temperature or lower by controlling the output of the sound. The processor 120 may control the output of the sound using closed loop control. More specifically, the processor 120 may control the output of the sound by adjusting a gain of the output of the sound by using proportional integral differential (PID) control. The processor 120 may perform the PID control on the basis of a difference between the predicted temperature and the threshold temperature, the outside air temperature, and/or a gradient of the amount of the increase or decrease in temperature.

According to the embodiment, the electronic device 101 may predict the energy of the sound prior to the output of the sound and maintain the temperature of the speaker 155 to the threshold temperature or lower on the basis of the predicted energy, thereby protecting the speaker 155 from damage caused by generated heat.

According to the embodiment, the processor 120 may divide the sound into sound parts by preset unit time and predict the energy of the sound when the processor 120 predicts the energy of the sound. For example, the preset unit time may be 0.5 ms. In this case, the processor 120 may predict the energy of the sound before a part of the sound of the 0.5 ms unit is outputted, and the processor 120 may predict the predicted temperature of the speaker 155. First, the processor 120 may predict energy of a first part (e.g., 0 ms to 0.5 ms) of the sound before the first part of the sound is outputted. The processor 120 may predict the predicted temperature of the speaker 155 when the first part of the sound is outputted. If the processor 120 determines that the predicted temperature of the speaker 155, which is related to the energy of the first part of the sound, exceeds the threshold temperature, the processor 120 may control the output of the first part. The part of the sound may mean a partial section separated from an overall time section of the sound (or overall playback time) by unit time. In one embodiment, when the overall time section of sound a is 5 seconds and divided by unit time of 0.5 seconds, sound a may be divided into ten sound parts by unit time of 0.5 seconds. Next, the processor 120 predicts the energy of a second part (e.g., 0.5 ms to 1 ms) of the sound before the second part of the sound is outputted. The processor 120 may predict the predicted temperature of the speaker 155 when the second part of the sound is outputted. If the processor 120 determines that the predicted temperature of the speaker 155, which is related to the energy of the second part of the sound, exceeds the threshold temperature, the processor 120 may control the output of the second part. The processor 120 may repeat the above-mentioned process on a third part (e.g., 1 ms to 1.5 ms), a fourth part (e.g., 1.5 ms to 2 ms), and an nth part of the sound.

In one embodiment, the amount of the increase or decrease in temperature related to the first part of the sound predicted by the processor 120 may be 0.5 degrees. When the threshold temperature of the speaker 155 is 30 degrees and the outside air temperature is 29 degrees, the predicted temperature of the speaker 155 may be 29.5 degrees equal to or lower than the threshold temperature. The processor 120 may output the first part of the sound without performing the temperature control. The amount of the increase or decrease in temperature related to the second part of the sound predicted by the processor 120 may be 0.7 degrees. In this case, the processor 120 may predict the predicted temperature of the speaker 155 on the basis of the outside air temperature, the immediately previous amount of the increase or decrease in temperature, and the amount of the increase or decrease in temperature. Alternatively, at a part subsequent to the second part of the sound, the processor 120 may predict the predicted temperature of the speaker 155 on the basis of the previously predicted temperature of the speaker 155 and the currently predicted amount of the increase or decrease in temperature. When the processor 120 outputs the second part of the sound, the processor 120 may predict the predicted temperature of the speaker 155 as 31.2 degrees (29 degrees + 0.5 degrees + 0.7 degrees or 29.5 degrees + 0.7 degrees). Because the predicted temperature of the speaker 155 may exceed the threshold temperature, the processor 120 may control the output of the second part of the sound.

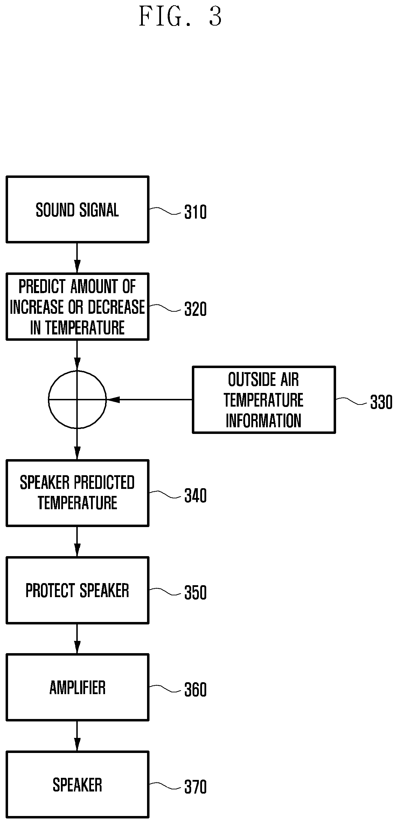

FIG. 3 is a flowchart for explaining a process of outputting a sound according to various embodiments.

In the embodiment to be described below, the respective operations may be sequentially performed. However, the operations need not be necessarily performed sequentially. For example, the order of the respective operations may be changed, and at least two operations may be performed in parallel.

According to the embodiment, steps 310 to 370 may be understood as being performed by the processor (e.g., the processor 120 in FIG. 2) of the electronic device (e.g., the electronic device 101 in FIG. 2).

With reference to FIG. 3, the electronic device 101 may include sound signals (310). For example, the sound signals may include audio signals, voice signals, and beeps. The sound signal may be stored in the memory (e.g., the memory 130 in FIG. 1) and received from the outside through the communication module (e.g., the communication module 190 in FIG. 1).

According to the embodiment, the electronic device 101 may predict an increase or decrease in temperature of the speaker (e.g., the speaker 155 in FIG. 2) (320). For example, the electronic device 101 may predict energy of the sound signal. Further, the electronic device 101 may use the thermal model and predict the amount of the increase or decrease in temperature of the speaker 155 from the predicted energy of the sound signal. In addition, the electronic device 101 may predict outside air temperature information by using the sensor 176 (330). The electronic device 101 may predict a predicted temperature of the speaker 155 on the basis of the outside air temperature information and the amount of the increase or decrease in temperature of the speaker 155 (340).

The electronic device 101 may protect the speaker 155 from damage caused by generated heat (350). According to the embodiment, the electronic device 101 may compare the predicted temperature with the threshold temperature of the speaker 155. When the predicted temperature is equal to or lower than the threshold temperature, the electronic device 101 may not perform the operation of protecting the speaker 155. When the predicted temperature exceeds the threshold temperature, the electronic device 101 may perform the operation of protecting the speaker 155. For example, the electronic device 101 may control the output of the sound by adjusting a gain of the output of the sound by means of the PID control. The electronic device 101 may perform the PID control on the basis of a difference between the predicted temperature and the threshold temperature, the outside air temperature, and/or a gradient of the amount of the increase or decrease in temperature.

According to the embodiment, when it has been determined to perform the operation of protecting the speaker 155, the electronic device 101 may attenuate an amplitude of the sound on the basis of the adjusted gain by using an amplifier (360) and output the sound through the speaker 155 (370). Because the temperature of the speaker 155 may be equal to or lower than the predicted temperature as the gain of the output of the sound is adjusted, the speaker 155 may be protected.

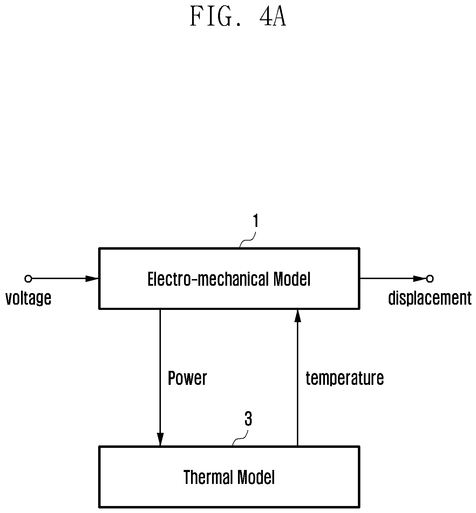

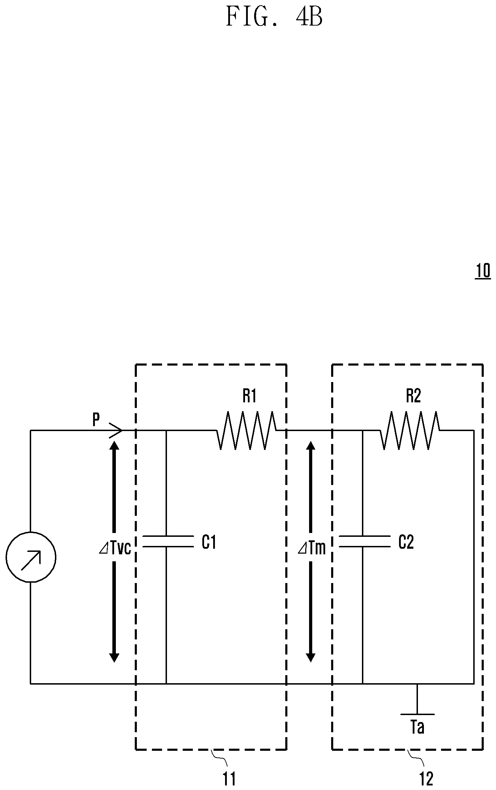

FIGS. 4A and 4B are views for explaining a thermal model according to various embodiments.

The speaker (e.g., the speaker 155 in FIG. 2) may include a coil. The coil may reciprocate when a voltage is provided to the coil. Acoustic wave signals and heat may be generated by the reciprocating motion of the coil.

FIG. 4A illustrates the thermal model of the speaker 155. As described above, the reciprocating motion, which is performed by the coil as a result of the provided voltage, may be connected to a part of an electro-mechanical model 1. The heat, which is generated from the coil by energy generated from the electro-mechanical model 1, may correspond to a part of a thermal model 3. A displacement may be predicted by means of the thermal model 3 of the speaker 155. For example, the displacement may be the amount of the increase or decrease in temperature. The amount of the increase or decrease in temperature of the speaker 155 may be the amount of the increase or decrease in temperature of the coil. The electro-mechanical model may model a displacement of the coil with respect to an input voltage. The electro-mechanical model may also generate a value of power to input to the thermal model and receive a temperature, or a temperature change (e.g. temperature increase or decrease), from the thermal model. The electro-mechanical model 1 and the thermal model 3 may each be implemented in electronics, e.g. analog electronics, or may be implemented as a numerical model, for example.

FIG. 4B illustrates an equivalent circuit 10 of the thermal model 3 of the speaker 155. The thermal model may model the thermal behavior of the speaker 155. The thermal model may receive the power from the electro-mechanical model 1, and output a temperature, or change in temperature, to the electro-mechanical model 1. The equivalent circuit 10 of the speaker 155 may include an equivalent circuit part 11 of the coil and an equivalent circuit part 12 of the magnet. The equivalent circuit part 11 of the coil may include a first equivalent resistor R1 and a first equivalent capacitor C1. The equivalent circuit part 12 of the magnet may include a second equivalent resistor R2 and a second equivalent capacitor C2.

The amount of the increase or decrease in temperature of the speaker 155, ΔT_{vc}, may be predicted from Equation 1 by using the equivalent circuit 10 of the thermal model 3 of the speaker 155. ΔTvc = [{R1 + R2 + s*(R1*R2)}/{1 + s*(R1*C1 + R2*C1 + R2*C2) + s2*(R1*C1*R2*C2)}]*P

Equation 1 is provided for illustration only, and the present disclosure is not limited thereto. Various modifications, applications, or explanations may be made.

In this case, P may be Power from the electro-mechanical model, which can be used to determine an energy of the sound, using E=Pt, where E is energy and t is time.

In general, the amount of change in temperature caused by a change in impedance of the speaker 155 may be very large. However, the amount of change in temperature caused by a change in resistor and/or capacitor may be very small. The thermal model 3 of the speaker 155 of the present disclosure may include the equivalent resistors R1 and R2 and the equivalent capacitors C1 and C2. The equivalent resistors R1 and R2 and the equivalent capacitors C1 and C2 may include actual and error values. However, because the amount of change in temperature caused by the change in resistor and/or capacitor is very small, the electronic device 101 of the present disclosure may predict the amount of the increase or decrease in temperature of the speaker 155 that rarely affects the errors of the equivalent resistor and the equivalent capacitor.

The electronic device 101 may predict the amount of the increase or decrease in temperature of the speaker 155 by using the thermal model 3 of the speaker 155 and predict the predicted temperature of the speaker 155 in consideration of the outside air temperature. Further, the electronic device 101 may control the gain of the sound on the basis of the threshold temperature and the predicted temperature.

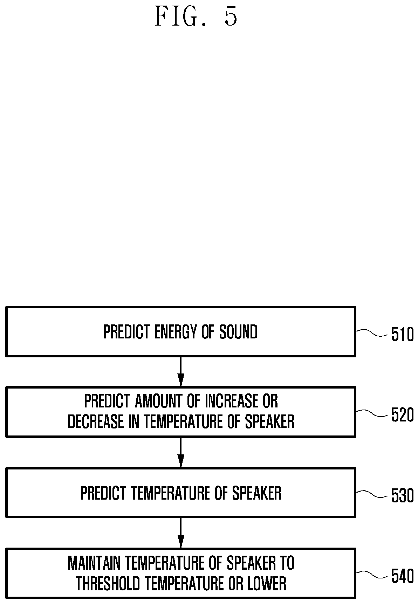

FIG. 5 is a flowchart for explaining a method of controlling the electronic device according to various embodiments.

In the embodiment to be described below, the respective operations may be sequentially performed. However, the operations need not be necessarily performed sequentially. For example, the order of the respective operations may be changed, and at least two operations may be performed in parallel.

According to the embodiment, 510 to 540 may be understood as being performed by the processor (e.g., the processor 120 in FIG. 2) of the electronic device (e.g., the electronic device 101 in FIG. 2).

With reference to FIG. 5, the electronic device 101 may predict energy of the sound (510). In one embodiment, the electronic device 101 may predict the energy of the sound before outputting the sound. For example, the electronic device 101 may predict the energy of the sound by squaring a waveform of the sound and obtaining an average value of the squared waveform of the sound. In addition, the electronic device 101 may divide the sound into sound parts by preset unit time and sequentially predict energy related to the separated sound parts.

The electronic device 101 may use the thermal model (e.g., the thermal model 3 in FIG. 4B) and predict the amount of the increase or decrease in temperature of the speaker (e.g., the speaker 155 in FIG. 2) from the predicted energy of the sound (520). For example, the thermal model may be a thermal model of the speaker 155. The thermal model of the speaker 155 may be a thermal model of the coil included in the speaker 155. For example, the thermal model of the speaker 155 may be a model that indicates the reciprocating motion of the coil made by the supply of the voltage and indicates heat and energy generated by the reciprocating motion of the coil. The thermal model may be expressed as an equivalent circuit of the speaker 155. The equivalent circuit of the speaker 155 may include an equivalent resistor and an equivalent capacitor. The electronic device 101 may predict the amount of the increase or decrease in temperature on the basis of the equivalent resistor value, the equivalent capacitor value, and the predicted energy of the sound.

The electronic device 101 may predict the predicted temperature of the speaker 155 (530). The electronic device 101 may predict the amount of the increase or decrease in temperature of the speaker 155 by using the thermal model. Further, the electronic device 101 may predict the outside air temperature by using the sensor (e.g., the sensor 176 in FIG. 2). The electronic device 101 may predict the predicted temperature of the speaker 155 on the basis of the outside air temperature and the amount of the increase or decrease in temperature (530). Alternatively, the electronic device 101 may sequentially predict the energy related to the sound parts separated by the preset unit time. In this case, the electronic device 101 may predict the predicted temperature of the speaker 155 on the basis of the outside air temperature, the immediately previous amount of the increase or decrease in temperature, and the amount of the increase or decrease in temperature. Alternatively, at a part subsequent to the second part of the sound, the electronic device 101 may predict the predicted temperature of the speaker 155 on the basis of the previously predicted temperature of the speaker 155 and the currently predicted amount of the increase or decrease in temperature.

The electronic device 101 may maintain the temperature of the speaker 155 to the threshold temperature or lower (540). For example, when the electronic device 101 identifies that the predicted temperature exceeds the threshold temperature, the electronic device 101 may maintain the temperature of the speaker 155 to the threshold temperature or lower by controlling the output of the sound. The electronic device 101 may control the output of the sound on the basis of a difference between the predicted temperature and the threshold temperature, the outside air temperature, and/or a gradient of the amount of the increase or decrease in temperature. The electronic device 101 may control the output of the sound by adjusting a gain of the output of the sound by using the PID control.

In one embodiment, the electronic device 101 may include the sensor 176 configured to detect the outside air temperature, the speaker 155 configured to output the sound, and the at least one processor 120. The at least one processor 120 may predict the energy of the sound. The at least one processor 120 may predict the amount of the increase or decrease in temperature of the speaker 155 from the energy of the sound predicted by using the thermal model. The at least one processor 120 may predict the predicted temperature of the speaker 155 on the basis of the outside air temperature and the amount of the increase or decrease in temperature of the speaker 155. The at least one processor 120 may maintain the temperature of the speaker 155 to the threshold temperature or lower on the basis of the predicted temperature and the threshold temperature of the speaker 155.

In one embodiment, when the at least one processor 120 identifies that the predicted temperature exceeds the threshold temperature, the at least one processor 120 may maintain the temperature of the speaker 155 to the threshold temperature or lower by controlling the output of the sound.

In one embodiment, the at least one processor 120 may control the output of the sound on the basis of at least one of a difference between the predicted temperature and the threshold temperature, the outside air temperature, and the gradient of the amount of the increase or decrease in temperature.

In one embodiment, the at least one processor 120 may control the output of the sound by adjusting the gain of the output of the sound by using proportional integral differential (PID) control.

In one embodiment, the thermal model may include the equivalent resistor and the equivalent capacitor of the speaker 155.

In one embodiment, the at least one processor 120 may predict the amount of the increase or decrease in temperature on the basis of the equivalent resistor value, the equivalent capacitor value, and the predicted energy of the sound.

In one embodiment, the at least one processor 120 may divide the sound into the sound parts by the preset unit time and predict the energy of the sound parts before the sound parts separated by preset unit time are outputted.

In one embodiment, a method of controlling the electronic device 101 may predict energy of the sound (510). The control method may predict the amount of the increase or decrease in temperature of the speaker 155 from the predicted energy of the sound by using the thermal model (520). The control method may predict the predicted temperature of the speaker 155 on the basis of the detected outside air temperature and the amount of the increase or decrease in temperature of the speaker 155 (530). The control method may maintain the temperature of the speaker 155 to the threshold temperature or lower on the basis of the predicted temperature and the threshold temperature of the speaker 155.

In one embodiment, when the operation of maintaining the temperature of the speaker 155 to the threshold temperature or lower identifies that the predicted temperature exceeds the threshold temperature, the operation of maintaining the temperature of the speaker 155 to the threshold temperature or lower may maintain the temperature of the speaker 155 to the threshold temperature or lower by controlling the output of the sound.

In one embodiment, the operation of maintaining the temperature of the speaker 155 to the threshold temperature or lower may control the output of the sound on the basis of at least one of a difference between the predicted temperature and the threshold temperature, the outside air temperature, and the gradient of the amount of the increase or decrease in temperature.

In one embodiment, the operation of maintaining the temperature of the speaker 155 to the threshold temperature or lower may control the output of the sound by adjusting the gain of the output of the sound by using proportional integral differential (PID) control.

In one embodiment, the thermal model may include the equivalent resistor and the equivalent capacitor of the speaker 155.

In one embodiment, the operation of acquiring the amount of the increase or decrease in temperature of the speaker 155 may predict the amount of the increase or decrease in temperature on the basis of the equivalent resistor value, the equivalent capacitor value, and the predicted energy of the sound.

In one embodiment, the operation of acquiring the energy of the sound may divide the sound into the sound parts by the preset unit time and predict the energy of the sound parts before the sound parts separated by preset unit time are outputted.

In one embodiment, a non-transitory computer-readable storage medium, on which a program for executing the method of controlling the electronic device is recorded, may perform the operation of predicting energy of the sound. The storage medium may use the thermal model and perform the operation of predicting the amount of the increase or decrease in temperature of the speaker 155 from the predicted energy of the sound. The storage medium may perform the operation of predicting the predicted temperature of the speaker 155 on the basis of the detected outside air temperature and the amount of the increase or decrease in temperature of the speaker 155. The storage medium may perform the operation of maintaining the temperature of the speaker 155 to the threshold temperature or lower on the basis of the predicted temperature and the threshold temperature of the speaker 155.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A orB," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The effects of the present document are not limited to the aforementioned effects, and other effects, which are not mentioned above, will be clearly understood by those skilled in the art from the above-mentioned description.

## Claims

1. An electronic device comprising:
a sensor configured to detect an outside air temperature;
a speaker configured to output a sound; and
at least one processor,
wherein the at least one processor is configured to:
predict energy of the sound;
predict an amount of an increase or decrease in temperature of the speaker from the predicted energy of the sound by using a thermal model;
predict a temperature of the speaker based on the outside air temperature and the predicted amount of the increase or decrease in temperature of the speaker; and
maintain a temperature of the speaker to a threshold temperature or lower on the basis of the predicted temperature and the threshold temperature of the speaker.

2. The electronic device of claim 1,
wherein the at least one processor is configured to maintain the temperature of the speaker to the threshold temperature or lower by controlling an output of the sound when it is identified that the predicted temperature exceeds the threshold temperature.

3. The electronic device of claim 2,
wherein the at least one processor is configured to control the output of the sound on the basis of at least one of a difference between the predicted temperature and the threshold temperature, the outside air temperature, and a gradient of the amount of the increase or decrease in temperature.

4. The electronic device of claim 2,
wherein the at least one processor is configured to control the output of the sound by adjusting a gain of the output of the sound by using proportional integral differential, PID, control.

5. The electronic device of claim 1,
wherein the thermal model comprises an equivalent resistor and an equivalent capacitor of the speaker.

6. The electronic device of claim 5,
wherein the at least one processor is configured to predict the amount of the increase or decrease in temperature on the basis of an equivalent resistor value, an equivalent capacitor value, and the predicted energy of the sound.

7. The electronic device of claim 1, wherein the at least one processor is configured to divide the sound into sound parts by preset unit time and predicts energy of the sound parts before the sound parts separated by the preset unit time are outputted.

8. A method of controlling an electronic device, the method comprising:
predicting energy of a sound;
predicting an amount of an increase or decrease in temperature of a speaker from the predicted energy of the sound by using a thermal model;
predicting temperature of the speaker based on a detected outside air temperature and the predicted amount of the increase or decrease in temperature of the speaker; and
maintaining a temperature of the speaker to a threshold temperature or lower on the basis of the predicted temperature and the threshold temperature of the speaker.

9. The method of claim 8,
wherein in the maintaining of the temperature of the speaker to the threshold temperature or lower, the method comprises controlling an output of the sound to maintain the temperature of the speaker to the threshold temperature or lower when it is identified that the predicted temperature exceeds the threshold temperature.

10. The method of claim 9,
wherein in the maintaining of the temperature of the speaker to the threshold temperature or lower, the method comprises controlling the output of the sound on the basis of at least one of a difference between the predicted temperature and the threshold temperature, the outside air temperature, and a gradient of the amount of the increase or decrease in temperature.

11. The method of claim 8,
wherein in the maintaining of the temperature of the speaker to the threshold temperature or lower, the method comprises controlling the output of the sound by adjusting a gain of the output of the sound by using proportional integral differential, PID, control.

12. The method of claim 8,
wherein the thermal model comprises an equivalent resistor and an equivalent capacitor of the speaker.

13. The method of claim 12,
wherein in the predicting of the amount of the increase or decrease in temperature of the speaker, the amount of the increase or decrease in temperature is predicted on the basis of an equivalent resistor value, an equivalent capacitor value, and the predicted energy of the sound.

14. The method of claim 8, wherein the predicting of the energy of the sound comprises:
dividing the sound into sound parts by preset unit time; and
predicting the energy of the sound parts before the sound parts separated by the preset unit time are outputted.

15. A non-transitory computer readable medium which, when implemented by an electronic device related to a method of controlling an electronic device, causes the electronic device to implement operations comprising:
predicting energy of a sound;
predicting an amount of an increase or decrease in temperature of a speaker from the predicted energy of the sound by using a thermal model;
predicting temperature of the speaker based on a detected outside air temperature and the predicted amount of the increase or decrease in temperature of the speaker; and
maintaining a temperature of the speaker to a threshold temperature or lower on the basis of the predicted temperature and the threshold temperature of the speaker.
